# EUROPEAN PATENT APPLICATION

(11) **EP 3 598 125 A1**
(43) Date of publication of application: **22.01.2020**
(21) Application number: 18184801.1
(22) Date of filing: 20.07.2018
(51) Int. Cl.: G01N 30/46, G01N 30/20, G01N 30/60, B01L 3/00, G01N 35/10

(54) **DEVICE FOR MULTI-DIMENSIONAL LIQUID ANALYSIS**

(71) Applicant: Universiteit van Amsterdam, 1012 WX Amsterdam (NL); Vrije Universiteit van Brussel, 1050 Brussel (BE)
(72) Inventor: Adamopoulou, Theodora, 1211 JH Hilversum (NL); Schoenmakers, Peter, 1724 NV Oudkarspel (NL); Desmet, Gert, 1050 Brussel (BE); Deridder, Sander, 1050 Brussel (BE)
(74) Representative: De Vries & Metman

(57) **Abstract**

Device (1) for multi-dimensional liquid analysis, such as chromatography. The device comprises a first analysis channel (3) and one or more second analysis channels (5). The first analysis channel comprises a channel wall (21) with outlets (11) connecting the first analysis channel to one of the plurality of second analysis channels, and a valve (7) for opening or closing at least one of the one or more outlets (11) .

## Description

The invention relates to a device for multi-dimensional liquid analysis, such as chromatography.

In multi-dimensional liquid chromatography a liquid mixture is separated by sequentially passing through different separation stages. To this end an eluate from a separation stage is passed to a next separation stage. Typically the next separation stage uses a different adsorbent or separation mechanism, so that fractions that are at most roughly separated in the first separation stage may be completely separated in the next separation stage. Alternatively, the two consecutive stages may be run at different temperatures or other process conditions.

Multi-dimensional liquid chromatography offers high separation efficiency in the number of peaks that can be obtained and peak production rate. Multi-dimensional chromatography is particularly useful for analyzing complex mixtures of multiple components with divergent adsorbing behavior, such as complex fluids of biological origin.

A microfluidic example of a two-dimensional liquid chromatography device is disclosed in 'Design of a microfluidic device for comprehensive spatial two-dimensional liquid photography', Wouters et al., Journal of Separation Science, vol. 7/15, p. 1123-1129, 2015. A liquid sample is first introduced into a first separation channel holding an adsorbent stationary phase. The liquid is separated over the channel, each separated fraction having it's corresponding coordinate over the length of the channel. In a next step, these fractions are flushed by a solvent into a series of parallel second separation channels perpendicular to the first separation channel for further separation. These second separation channels connect at one side of the first separation channel, opposite to inlets for an eluent. To generate a homogeneous flow of solvent across all second separation channels, the eluent is supplied to the inlets via a flow distributor.

It is an object of the invention to improve the accuracy of such multi-dimensional chromatography. It is a further object to provide a design that can also be used on a non-microfluidic scale.

The object of the invention is achieved with a device for multi-dimensional liquid analysis, such as chromatography. The device comprises a first analysis channel and one or more second analysis channels. The first analysis channel comprises a channel wall with one or more outlets connecting the first analysis channel to one of the plurality of second analysis channels. The device is provided with a valve for opening or closing one or more of the outlets, e.g., simultaneously.

This configuration enables accurate flow control and timing of the flow from the first analysis channel to the next analysis channels. It has been found that this contributes significantly to the accuracy of the analytical results.

The valve can for example be a sliding valve or a rotational valve. For example, if the first analysis channel has a cylindrical interior, the valve may comprise a cylindrical hollow body rotatably fitting within the cylindrical interior. The cylindrical valve body may comprise an inner space, an inlet for allowing entry of a liquid sample into the inner space, and at least one flow passage in the channel wall allowing liquid to exit the inner space. Such a valve can be provided with a grip. The cylindrical hollow body of the valve can be filled with an adsorbent or similar stationary phase. Optionally, the interior space of the valve can be empty, e.g., in case the device is used for isoelectric focusing.

This configuration allows a very accurate flow control between the first analysis channel and the downstream plurality of second analysis channels. It was found that this results in a significantly more accurate chromatographic separation. Moreover, relatively large outlet openings can now be used, so the device is also suitable for applications larger than microfluidic scale.

In a specific embodiment the first analysis channel may comprise a row of outlets, each outlet opening into one of a plurality of second analysis channels. The valve body may comprise a row flow passages. In that case the number and position of the flow passages may correspond to the number and positions of the outlets of the first analysis channel.

In an alternative embodiment, the first analysis channel may comprise a slit-shaped outlet opening into a planar second analysis channel.

The channel wall of the first analysis channel may for example comprises a row of solvent inlets, while the cylindrical valve body may comprise at least one solvent passage, such that in one position of the valve the solvent inlets are aligned with the at least one solvent passage while at the same time the outlets of the first analysis channel are aligned with the flow passages of the valve body. Such a solvent passage of the valve may for example comprise a slit extending along the length of the row of solvent inlets of the first analysis channel. Alternatively, the valve may comprise a row of solvent passages. In that case the number and position of the solvent passages may correspond to the number and positions of the solvent inlets of the first analysis channel.

At the start of the chromatographic process, the cylindrical valve body is in a first position closing off the outlets of the first analysis channel. A liquid mobile phase to be analyzed enters the adsorbent of the first analysis channel and is separated into different fractions at different positions of the first analysis channel. In a next step, the cylindrical body of the valve is rotated until the flow passages of the valve are aligned with the outlets of the first analysis channel. Each of the fractions is transported by a fresh solvent via the nearest outlet into the associated second analysis channel, where the fraction is separated into further sub-fractions.

To control the solvent flow, the cylindrical wall of the first analysis channel may comprise a row of solvent inlets, and the cylindrical body of the valve comprises at least one solvent passage, such that in one position of the valve the solvent inlets are aligned with the solvent passages, while at the same time the outlets of the first analysis channel are aligned with the flow passages of the valve body. This ensures that the solvent can only flow through the first analysis channel when the outlets to the second analysis channels are opened.

The solvent passage of the valve can for example be or comprise a slit extending along the length of the row of solvent inlets of the first analysis channel. Alternatively, the valve may comprise a row of solvent passages, the solvent passages having a spacing corresponding to the spacing of the solvent inlets of the first analysis channel. In a specific embodiment the solvent passages in the valve body are diametrically opposite to the flow passages.

The flow passage(s) in the valve can be open or be covered with a permeable membrane or frit, particularly if the flow passage is formed by one or more slits, such as a single slit extending over the full length of the chromatographic tract. Similarly, the outlets of the first analysis channel can be open or be covered with a permeable membrane or frit.

The solvent inlets can be connected to a flow distributor to optimize an even flow distribution over the length of the first analysis channel.

Adsorbent material can be present in the interior of the valve body, e.g., bridging the space between the solvent passages and the flow passages leading to the outlets.

The valve can be made interchangeable. For example, if a valve is used with a first adsorbent it can be replaced after use by a similar second valve containing a different adsorbent or providing different process conditions.

The interior space of the hollow cylindrical valve body can be cylindrical or have an elliptical or oval cross sectional shape or it can have any other suitable shape as long as it provides a channel between the solvent inlets and the outlets leading to the second analysis channels. The device can be a two-dimensional separation device with a plurality of second analysis channels connected to a first analysis channel. Optionally, the device can be a three-dimensional separation device wherein one or more of the second analysis channels are connected to a plurality of third analysis channels with a similar arrangement of openings, passages and valves. Further dimensions can also be added, within practical limits and constraints.

The valve and the device as a whole, can easily be manufactured, e.g., of a suitable plastic material, for instance by 3D printing, e.g., stereolithography or fused deposition modeling.

The device is particularly suitable for multi-dimensional chromatography. In some cases not all fractions that are isolated in the first analysis channel need to be relevant for further analysis. In such a case, only a selection of the isolated fractions is further analyzed in a second or this analysis channel. This is so-called heart-cutting or selective 2D liquid chromatography or heart-cutting or selective 3D liquid chromatography.

Optionally, the device can also be used for other analysis techniques. For instance, different compositions can be obtained at different positions in the first analysis channel, for example by location-dependent chemical reactions and/or induced by variations in light intensity, light wave length or temperatures along the length of the first separation channel.

It also possible to use the device for one-dimensional chromatography in the first analysis channel and subsequent analysis of one or more samples in a next second analysis channel, or to use the device for non-chromatographic analysis of one or more samples in the first analysis channel and subsequent one-dimensional chromatography in a next second analysis channel.

The invention will be further explained with reference to the accompanying drawings showing exemplary embodiments.
Figure 1: shows schematically a device for two-dimensional analysis in perspective view;
Figure 2: shows the device of Figure 1 in front view;
Figure 3: shows a valve body of the device of Figure 1;
Figure 4: shows the valve body of Figure 2 in side view;
Figure 5: shows an exemplary embodiment of a device for three-dimensional analysis;
Figure 6: shows an alternative embodiment of a device for two-dimensional chromatography;
Figure 7: shows a valve for the device of Figure 6;
Figure 8: shows a further alternative embodiment of a valve;
Figure 9: shows the valve of Figure 9 in side view.

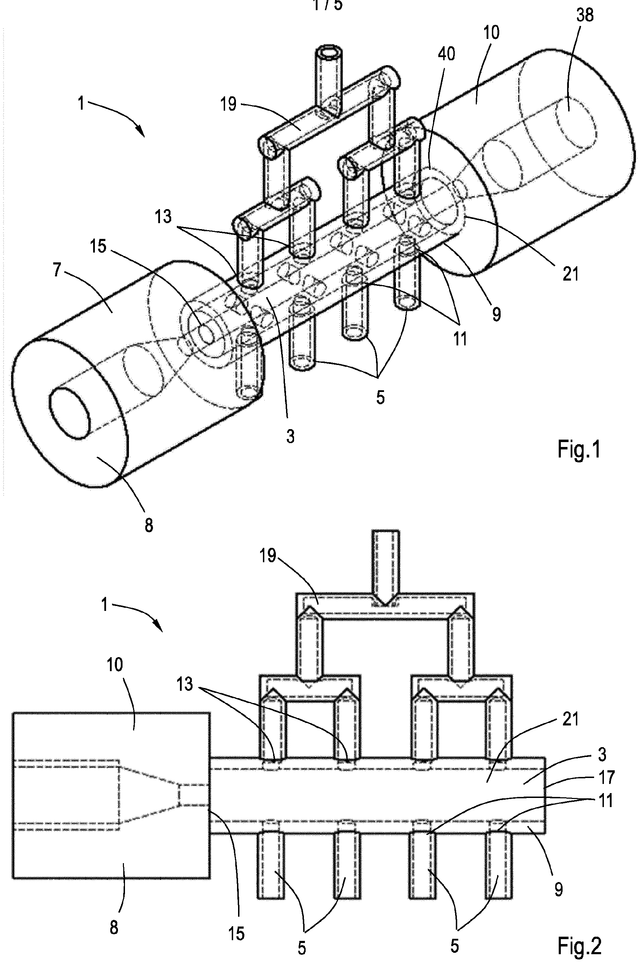

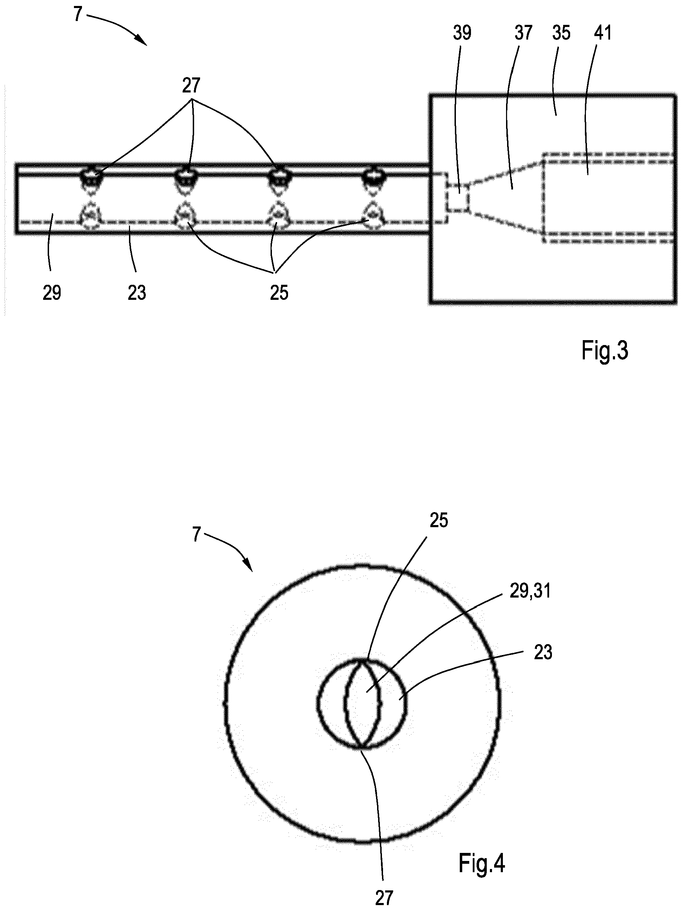

Figure 1 shows a device 1 for two-dimensional analysis, in this embodiment in particular for two-dimensional liquid chromatography. The device 1 comprises a first separation channel 3, a plurality of parallel second separation channels 5 extending radially from the first separation channel 3 and a valve 7 with a valve body 23 (see Figure 3) received within the first separation channel 3 and a valve grip 8 at one end of the valve body 23. Opposite to the valve grip 8, the device comprises a main grip 10 fixed to the channel wall 9 of the first separation channel 3.

Figure 2 shows the device 1 without the valve 7. The first separation channel 3 comprises a cylindrical channel wall 9 with a row of equidistantly spaced outlets 11, each outlet 11 connecting the first separation channel 3 to one of the second separation channels 5. The cylindrical wall 9 is cylindrical in the sense that its interior space is cylindrical to allow rotation of the valve 7. The outside of the wall 9 may have any suitable cross-sectional outline. The row of outlets 5 extends in a direction parallel to the axial direction of the first separation channel 3. The channel wall 9 also comprises a row of equidistantly spaced solvent inlets 13, diametrically opposite to the outlets 11. In the shown embodiment, each solvent inlet 13 is diametrically opposite to an outlet 11. Alternative configurations, e.g., a staggered arrangement of openings, or openings with different equidistant or irregular spacings, numbers or sizes, etc., can also be used, if so desired.

The outlets can be open or be covered with a permeable membrane or frit.

The first separation channel 3 has an open outer end 15 for receiving the valve 7, and an opposite outer end 17 partly or completely closed by an end wall.

A flow distributor 19 is connected to each one of the solvent inlets 13 in order to optimize distribution of supplied solvent over the full length of the first separation channel 3. In the shown embodiment, the flow distributor 19 has a tree-structure, stepwise splitting the solvent flow into parallel sub-flows. Other solvent flow distribution systems can also be used, if so desired.

The first separation channel 3 has a cylindrical interior 21 holding a cylindrical valve body 23 of the valve 7 for simultaneously opening or closing the outlets 11 and the solvent inlets 13. The cylindrical hollow body 23 rotatably fits within the cylindrical inner wall 9 of the first separation channel 3. The valve 7 is shown separately in Figure 3.

The cylindrical valve body 23 comprises two diametrically opposite rows of openings 25, 27. At one side, the valve body 23 comprises a row of flow passages 25 with a spacing corresponding to the spacing of the outlets 11 in the channel wall 9 of the first separation channel 3. At the diametrically opposite side the valve body 23 comprises a row of solvent passages 27 with a spacing corresponding to the spacing of the solvent inlets 13 in the first separation channel 3. The spacings of the solvent inlets 13 of the channel 3, the solvent passages 27 of the valve 7, the flow passages 25 of the valve 7 and the outlets 11 of the channel 3 is such that they are all aligned in a flow-through position of the valve 7. Hence, in this position of the valve 7 the solvent inlets 13 are aligned with the solvent passages 27 while at the same time the outlets 11 of the first separation channel 3 are aligned with the flow passages 25 of the valve body 23.

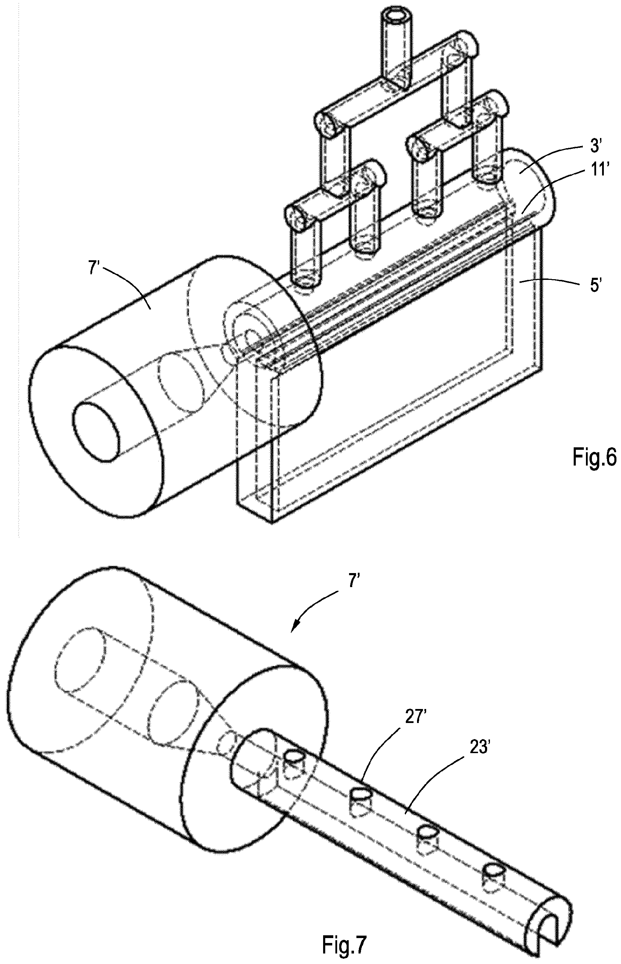

Figure 6 shows an alternative embodiment, the valve body 23 can have a solvent passage formed by a single slit extending in an axial direction of the valve body 23, or a row of smaller slits, or a combination of slits and openings. Similarly, the flow passages 25 for passing the eluate to the second separation channels 5 can be formed by a single slit extending in an axial direction of the valve body, or a row of slits, or a combination of slits and openings.

In a further alternative embodiment, the solvent passages 27 in the valve body 23 are not diametrically opposite to the flow passages 25, for instance if the flow distributor 19 is not coplanar with the second separation channels 5.

The cross sectional outline of the valve body 23 is circular so the valve 7 can be rotated within the first separation channel 3. The valve body 23 has an interior space 29 that can have any suitable shape as long as it contains a strip 31 of a suitable adsorbent radially extending between the solvent passage(s) 27 and the flow passage(s) 25 and axially extending over the full length of the first separation channel 3. This is particularly shown in Figure 4, showing the valve 7 in side view. In this embodiment the strip 31 of adsorbent material is more or less almond shaped, the walls of the valve interior 29 forming mirrored crescents.

At one end the valve grip 8 is coaxially connected to the cylindrical valve body 23. The grip 35 allows a user to rotate the valve 7 - manually or otherwise - relative to the first separation channel 3 between a closing position and a flow-through position.

The valve grip 35 contains an interior channel 37 with one end 39 fluidly connected to the interior 29 of the cylindrical valve body 23 and an opposite 41 end connected or connectable to a supply of liquid mixture to be analyzed. In the shown embodiment, the supply end 41 of the interior channel 37 is configured for connection to a supply tube (not shown), the channel narrowing down toward the end 39 connected to the valve body 23 to a diameter smaller than the diameter of the interior 29 of the valve body 23. Such a configuration helps to prevent leakage during operation. Other configurations can also be used, if so desired.

The opposite grip 10 (see Figure 1) is fixed to the channel wall 9 of the first separation channel 3 and mirrors the valve grip 8. The grip 10 also contains an interior channel 38 with one end 40 fluidly connected to the interior 29 of the cylindrical valve body 23 and an opposite end connected or connectable to a supply, e.g., of a flushing liquid.

The second separation channels 5 are operatively connected to the respective outlets 11 of the first separation channel 3. The second separation channels 5 are parallel, essentially coplanar and perpendicular to the first separation channel 3. In an alternative embodiment, the second analysis channels may make a non-perpendicular angle with the first analysis channel and/or not be coplanar parallel.

The second separation channels 5 have different chromatographic effect than the first separation channel 3, for instance they can be filled with a different adsorbent and/or have a different temperature control. The second separation channels 5 can all have the same adsorbent material and/or chromatographic conditions, or one or more of the second separation channels 5 can have a different type of adsorbent and/or be run at different chromatographic conditions.

The cylindrical valve body 23 of the valve 7 can be inserted into the cylindrical interior 21 of the first separation channel 3 until the grip 35 abuts the open end of the first separation channel 3. The valve 7 can then be rotated into a position where it closes off the solvent inlets 13 as well as the outlets 11 of the first separation channel 3. In this position, a sample of a liquid mixture can be fed to the first separation channel 3 via the channel 37 in the grip 35 of the valve 7. The liquid mixture then enters the adsorbent strip 31 in the valve body 23. The various constituents of the liquid mixture have different partition coefficients resulting in differential retention on the stationary phase adsorbent of the strip 31. This result in different travel speeds of fractions passing the first separation channel 3, causing the fractions to separate.

The separated fractions are also mixtures of different constituents, requiring further separation in order to obtain a complete and accurate analysis. Hence, after completion of the separation in the first separation channel 3, the valve 7 can be rotated into a position aligning the solvent passages 27 with the solvent inlets 13 of the first separation channel 3 and aligning the flow passages 25 of the valve 7 with the outlets 11 of the first separation channel 3. In this position, solvent from the flow distributor 19 enters the first separation channel 3 and the strip 31 in the interior 29 of the valve body 23. The solvent passes the adsorbent material and takes up the local fraction of the mobile phase and transports it into the local second separation channel. In this second separation channel, a next chromatographic separation takes place.

In the first separation phase different fractions are separated at different positions in the first separation channel 3. As a result, different fractions will enter different second separation channels 5. The different fractions will be further separated in the respective second separation channels 5.

In an alternative embodiment, a slider valve can be used instead of a rotational valve. In such a case the valve body 23 can be slid within the first separation channel 3 between a closed position and a flow-through position aligning the openings with the solvent inlets and the outlets, instead of being rotated. With such an embodiment, the interior of the first separation channel does not need to be cylindrical.

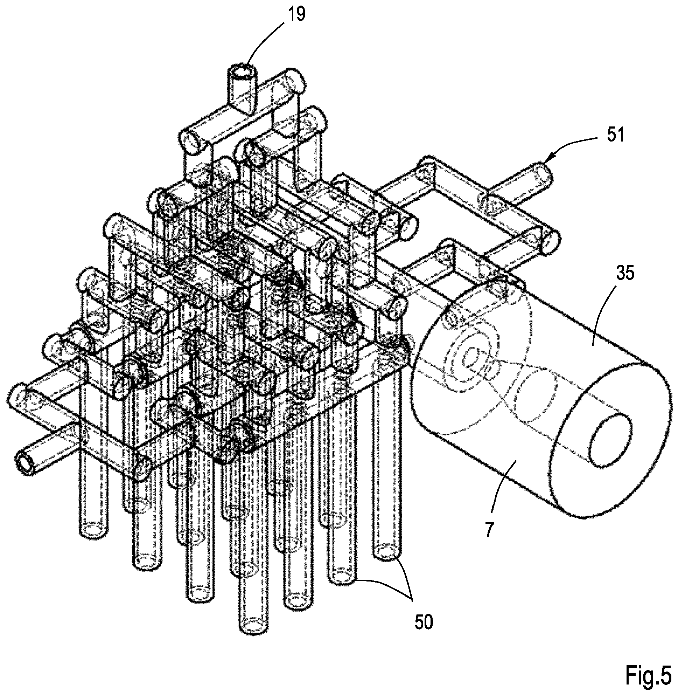

For some complex liquid mixture, it might be desirable to have further separation steps. In that case, some or all of the second separation channels 5 may be provided with a valve 7 as disclosed above and be connected to one or more third separation channels 50 with a similar arrangement of openings, passages and flow distributors. An example of such a three-dimensional chromatography device 51 is shown in Figure 5.

Figure 6 shows a further alternative embodiment, which is mainly similar to the embodiment shown in Figure 1, with the difference that the second separation channel 5' is formed by a single, substantially planar channel. The first separation channel 3' has a single outlet 11', shaped like a slit extending axially along the length of the first separation channel.

The valve 7' is shown separately in Figure 7 and comprises a cylindrical valve body 23' with a row of solvent passages 27 and a single slit-shaped flow passage 25' diametrically opposite to the row of solvent passages 27. By rotating the valve 7', it can be moved between a closed position and an open position, having the slit 25' in line with the outlet 11' of the first separation channel 3' and the solvent passages 27 aligned with the solvent inlets of the first analysis channel 3. Optionally, the slit 25' of the valve body 23' and/or the outlet slit can be covered by a permeable membrane or frit.

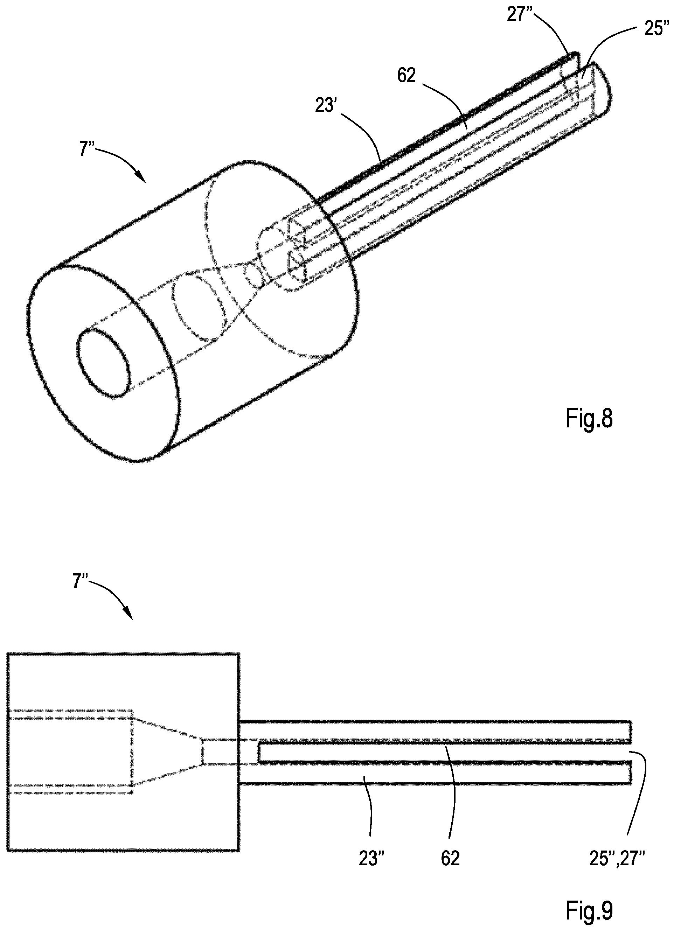

Figures 8 and 9 show an alternative embodiment of valve 7", which can be used in the device 1 of Figure 1 or the device of Figure 6. This valve 7" has a solvent passage formed as a single slit and a diametrically opposite flow passage 25", also formed as a single slit. This way, the valve 7" has a valve body 23" with a cylindrical cross sectional shape split by a channel 62 radially extending between the solvent passage 27" and the diametrically opposite flow passage 25", and axially extending over the length of the first separation channel.

## Claims

1. Device (1) for multi-dimensional liquid analysis, such as chromatography, comprising a first analysis channel (3) and one or more second analysis channels (5),
wherein the first analysis channel comprises a channel wall (21) with one or more outlets (11) connecting the first analysis channel to one of the plurality of second analysis channels,
wherein the device is provided with a valve (7) for opening or closing at least one of the one or more outlets (11) .

2. Device according to claim 1, wherein the first analysis channel (3) has a cylindrical interior (21), and wherein the valve (7) comprises a cylindrical hollow body (23) rotatably fitting within the cylindrical interior (21),
wherein the cylindrical body (23) of the valve (7) comprises an inner space, an inlet for allowing entry of a liquid sample into the inner space, and at least one flow passage (25) in the channel wall allowing liquid to exit the inner space.

3. Device according to claim 1 or 2, the outlets of the first analysis channel are aligned in a row.

4. Device according to claim 2 and 3, wherein the valve body (23) comprises a row of flow passages (25), wherein the number and position of the flow passages corresponds to the number and positions of the outlets (11) of the first analysis channel.

5. Device according to any preceding claim, wherein the first analysis channel comprises a slit-shaped outlet opening into a planar second analysis channel.

6. Device according to claim 2, 3, 4 or 5, wherein the channel wall of the first analysis channel (3) comprises a row of solvent inlets (13), and the cylindrical body (23) of the valve comprises at least one solvent passage (27), such that in one position of the valve the solvent inlets are aligned with the at least one solvent passage while at the same time the outlets of the first analysis channel are aligned with the flow passages of the valve body.

7. Device according to claim 6, wherein the solvent passage (27) of the valve (7) comprises a slit extending along the length of the row of solvent inlets of the first analysis channel.

8. Device according to claim 6 or 7, wherein the valve (7) comprises a row of said solvent passages (27), the solvent passages having a size and spacing corresponding to the size and spacing of the solvent inlets (13) of the first analysis channel.

9. Device according to claim 6, 7 or 8, wherein the solvent passages (27) in the valve body are diametrically opposite to the flow passages (25).

10. Device according to any one of claims 3 - 9, wherein the interior of the valve (7) comprises an adsorbent material (31) extending between the solvent passages and the flow passages and extending over the length of the first analysis channel.

11. Device according to any one of the preceding claims , wherein the valve is interchangeable.

12. Device according of any preceding claim comprising a flow distributor (19) for evenly distributing a solvent over the length of the first analysis channel (3).

13. Device according to any preceding claim wherein one or more of the second analysis channels (5) is connected to a plurality of third analysis channels with a similar arrangement of openings, passages and valves.
